# EUROPÄISCHE PATENTSCHRIFT

(11) **EP 2 854 148 B1**
(45) Veröffentlichungstag und Bekanntmachung des Hinweises auf die Patenterteilung: **02.08.2017**
(21) Anmeldenummer: 14172671.1
(22) Anmeldetag: 17.06.2014
(51) Int. Cl.: H01H 9/16, H01H 71/04, H02H 3/33

(54) **Fehlerstromschutzschalter und Kommunikationsgerät**
Ground fault circuit breaker and communication device
Commutateur de courant différentiel et appareil de communication

(30) Priorität: 25.09.2013 DE 102013219292
(43) Veröffentlichungstag der Anmeldung: 01.04.2015
(73) Patentinhaber: Siemens Aktiengesellschaft, 80333 München (DE)
(72) Erfinder: Adlhoch, Manfred, 93173 Wenzenbach (DE)

(56) Entgegenhaltungen:
- DE-A1-102004 040 289
- US-A1- 2006 087 783
- US-A1- 2008 231 410

## Beschreibung

Die Erfindung betrifft einen Fehlerstromschutzschalter und ein Kommunikationsgerät. Schutzschalter für elektrische Stromkreise sind allgemein bekannt. Eine Gruppe bilden die so genannten Fehlerstromschutzschalter. Diese überwachen den Stromkreis auf Erdfehlerströme bzw. technische Ableitströme. Sie werden auch als, Residual Current Device, kurz RCD, Residual Current Breaker, kurz RCB, bzw. Residual Current operated Circuit Breaker, kurz RCCB, bezeichnet. Im Fehlerfall, bspw. Isolationsfehler, berühren der elektrischen Anlage, etc., bei dem Fehlerströme auftreten, d.h. das die Stromsumme im elektrischen Stromkreis ungleich Null ist, detektieren sie dieses und unterbrechen den elektrischen Stromkreis bzw. schalten diesen ab. Heutige Fehlerstromschutzschalter werden immer komplexer und können nicht nur eine, einen elektrischen Fehler verursachende physikalische Größe überwachen, sondern eine Vielzahl weiterer Größen bzw. Parameter. D.h. in heutigen Fehlerstromschutzschaltern werden neben der primär zu überwachenden physikalischen Größe auch weitere physikalische Größen mit erfasst. Beispielsweise kann ein Fehlerstromschutzschalter nicht nur die Stromsumme überwachen, sondern auch Überströme überwachen, den Strom, die elektrische Spannung, die Frequenz, etc. erfassen.

Die Funktionalität heutiger Schutzschalter bzw. Schutzschaltgeräte wird immer umfangreicher, inklusive der Fähigkeit zum Durchführen von Selbsttests, der Erfassung von Überspannung, die Bereitstellung von Fehlerstrom-, Überlast- und Kurzschlussschutz bzw. der Erfassung von zeitlichen Verläufen physikalischer Größen.

Heutige Fehlerstromschutzschalter weisen deshalb einen Mikrocontroller bzw. Mikroprozessor inklusive zugehöriger Peripherie auf, um diese vielfältigen Funktionalitäten zu realisieren.

Das Vorhandensein eines Mikrokontrollers in einem Fehlerstromschutzschalter stellt Rechenleistung zur Verfügung, mit denen auch komplexe Analysen im Schalter durchgeführt werden können. Dabei stehen im Schalter umfangreiche Daten aus der Überwachung der physikalischen Größen zur Verfügung.

Je mehr Funktionalität der Fehlerstromschutzschalter bzw. das Schutzschaltgerät hat, desto komplexer wird die Anzeige des Status am Gerät. Herkömmliche Fehlerstromschutzschalter weisen eine Statusanzeigevorrichtung auf. Diese wird üblicherweise durch eine optische Anzeige realisiert. Die optische Anzeige wird in der Regel durch ein lichtemittierendes Element gebildet, wie eine Licht-emittierende Diode, Lichtemitterdiode bzw. Leuchtdiode, kurz LED.

Dabei kann die LED am Gehäuse des Fehlerstromschutzschalters angeordnet sein, so dass sie von außen sichtbar ist. Alternativ kann die LED auch im Inneren des Fehlerstromschutzschalter, auf einer Schutzschalterbaugruppe bzw. Schutzschaltbaugruppe angeordnet sein, und das optische Signal, das den Zustand des Fehlerstromschutzschalters signalisiert, über einen Lichtwellenleiter zur Gehäuseaußenseite des Fehlerstromschutzschalters geführt sein, so dass es von außen sichtbar ist.

Die Statusanzeigevorrichtung zeigt dabei üblicherweise bei Auslösung im Fehlerfall den Fehlerzustand an. In Ausgestaltungen werden Hinweise auf die Fehlerursache durch blinkende bzw. verschiedenfarbige Anzeigen signalisiert.

In der deutschen Patentanmeldung DE 10 2011 082 258 A1 wird ein Schutzschaltgerät mit einer Statusanzeigevorrichtung beschrieben. Damit lässt sich eine Vielzahl von Zuständen anzeigen. Dies wird durch leuchtende, nichtleuchtende, blinkende bzw. sich farblich unterscheidende LED erzielt.

In der US-amerikanischen Patentanmeldung US 2006/087783 A1 werden eine Einrichtung und ein System für die drahtlose Kommunikation mit einem Stromunterbrecher beschrieben. Diese erlaubt das Erhalten von Daten von einem Stromunterbrecher, um einfach Informationen über den Unterbrechungsvorgang zu erhalten. Der Stromunterbrecher enthält ein elektronisches Modul, welches konfiguriert ist, um Daten aufzuzeichnen und zu senden mittels drahtloser Technologie.

Die US-amerikanische Patentanmeldung US 2008/0231410 A1 beschreibt einen RFID offenen Schmelzsicherungsindikator, System und Verfahren. Ein elektrischer Schmelzsicherungsindikator erkennt, wenn der Schmelzdraht einer Schmelzsicherung geschmolzen ist, und meldet dies.

Aufgabe der vorliegenden Anmeldung ist es, die Anzeige weiterer Informationen eines Fehlerstromschutzschalters zu ermöglichen.

Diese Aufgabe wird in einem Aspekt durch einen Fehlerstromschutzschalter mit den Merkmalen gemäß Patentanspruch 1 gelöst und in einem anderen Aspekt durch ein Kommunikationsgerät mit den Merkmalen des Anspruch 10.

Erfindungsgemäß ist unter anderem vorgesehen, dass der Fehlerstromschutzschalter ein lichtempfindliches Element, wie eine Fotodiode, aufweist, die mit der einen Mikrocontroller aufweisenden Schutzschaltbaugruppe zusammenwirkt, und die den Mikrocontroller aufweisenden Schutzschaltbaugruppe derart ausgestaltet ist, dass bei Empfang eines codierten optischen Signals mittels des lichtempfindlichen Elements der Mikrocontroller in einen Diagnose-Modus versetzt wird und über die Statusinformationen hinausgehende erweitertes Informationen mittels des lichtemittierenden Elementes abgibt.

Diese erweiterten Informationen des Fehlerstromschutzschalters können beispielsweise sein:
- Momentanwerte bzw. Verlaufswerte von Strom, Spannung, Frequenz oder/und anderen Größen oder Signalen, beispielsweise um aktuelle Messugnen durchzuführen
- Historie der Ereignisse im Fehlerstromschutzschalter, wie Auslösungen, Fehlerarten, etc.
- Sonstige Diagnosedaten
- Firmware-Stand bzw. Firmware upgrade

Vorteilhafte Ausgestaltungen der Erfindung sind in den Unteransprüchen angegeben.

In einer vorteilhaften Ausgestaltung der Erfindung ist die den Mikrocontroller aufweisende Schutzschaltbaugruppe derart ausgestaltet, dass im Diagnose-Modus mittels codierter optischer Signale Anfragen an den Mikrocontroller über Informationen des Fehlerstromschutzschalters gestellt werden können, deren Antworten mittels codierter optischer Signale durch das lichtemittierende Element abgegeben werden.
Dies hat den besonderen Vorteil, dass gezielt bestimmte, sonst nicht angezeigte Informationen abgerufen und angezeigt werden können.

In einer vorteilhaften Ausgestaltung der Erfindung ist die den Mikrocontroller aufweisende Schutzschaltbaugruppe derart ausgestaltet ist, dass der Diagnose-Modus nach einer ersten Zeitdauer, in der kein codiertes optisches Signal empfangen wird, beendet wird. Dies hat den Vorteil, dass der Diagnose-Modus automatisch beendet wird, sofern kein codiertes optisches Signal empfangen wird.

In einer vorteilhaften Ausgestaltung der Erfindung ist das lichtemittierende Element als Lichtemitterdiode bzw. LED ausgebildet. Dies hat den Vorteil, dass eine einfache und billige Realisierung der optischen Anzeige möglich ist.

In einer vorteilhaften Ausgestaltung der Erfindung ist das lichtempfindliche Element als Fotodiode ausgebildet. Dies hat den Vorteil, dass eine einfache und billige Realisierung der optischen Erfassung möglich ist.

In einer vorteilhaften Ausgestaltung der Erfindung ist das lichtemittierende Element auf der Schutzschaltbaugruppe angeordnet ist und mit einem zu einer Gehäuseaußenseite führenden Lichtwellenleiter verbunden ist, so dass die optischen Signale am bzw. außerhalb des Gehäuses sichtbar sind. Dies hat den Vorteil, dass die elektronischen Bauelemente für den Fehlerstromschutzschalter inklusive des lichtemittierenden Elementes auf einer Leiterplatte angeordnet werden können.

In einer vorteilhaften Ausgestaltung der Erfindung ist das lichtempfindliche Element auf der Schutzschaltbaugruppe angeordnet ist und von der Gehäuseaußenseite die empfangenen optischen Signale über den Lichtwellenleiter zu dem lichtempfindlichen Element geführt werden. Dies hat den Vorteil, dass nur ein Lichtwellenleiter sowohl für die ausgesendeten als auf für die empfangenen optischen Signale verwendet wird. Der Lichtwellenleiter endet auf der Schutzschaltbaugruppe und ist sowohl mit dem lichtemittierenden als auch dem lichtempfindlichen Element verbunden. Beide Elemente können weitere optische Baugruppen enthalten, wie beispielsweise optische Filter, um ein paralleles Senden und Empfangen optischer Signale zu ermöglichen.

In einer vorteilhaften Ausgestaltung der Erfindung sind die Wellenlängen des ausgesendeten optischen Signals und des empfangenen optischen Signals unterschiedlich. Dies hat den Vorteil, dass ein paralleles Senden und Empfangen optischer Signale ermöglicht wird, wie beim Wellenlängenmultiplex. Alternativ können beide Signale auch wie im Zeitmultiplex übertragen werden.

In einer vorteilhaften Ausgestaltung der Erfindung werden mittels codierter optischer Signale neue Daten oder neue Software bzw. Firmware auf den Fehlerstromschutzschalter übertragen. Dies hat den Vorteil, dass sich so beispielsweise Firmwareupdates des Mikrocontrollers des Fehlerstromschutzschalters einfach realisieren lassen.

Erfindungsgemäß ist ferner ein Kommunikationsgerät vorgesehen, das zum einen codierte optische Signale erzeugt und über ein zweites lichtemittierendes Element abgibt, um einen Fehlerstromschutzschalter in einen Diagnosezustand zu versetzen bzw. Anfragen zu senden, und zum zweiten dass es codierte optische Signale empfängt, diese auswertet und darin enthaltene Informationen über ein Display anzeigt. Dies hat den besonderen Vorteil, dass die von einem Fehlerstromschutzschalter, der sich im Diagnosezustand befindet, abgegebenen codierten optischen Signale in einer einfach verständlichen Form angezeigt werden. Ferner können Abfragen einfach erzeugt und an den Fehlerstromschutzschalter abgegeben werden.

In einer vorteilhaften Ausgestaltung des erfindungsgemäßen Kommunikationsgerätes weist dieses einen zweiten Lichtwellenleiter auf, der über eine Klemme an den Fehlerstromschutzschalter anklemmbar ist. Dies hat den Vorteil, dass eine einfache und solide Verbindung mit dem lichtemittierenden und lichtempfindlichen Element am Fehlerstromschutzschalter bzw. mit der Statusanzeigevorrichtung möglich ist.

In einer vorteilhaften Ausgestaltung des erfindungsgemäßen Kommunikationsgerätes weist dieses eine dritte Kommunikationsverbindung zu einem Computer auf, über die Daten von und zum Computer übertragbar sind, so dass Daten vom Computer über das Kommunikationsgerät zum Fehlerstromschutzschalter und zurück übertragen werden können. Dies hat den Vorteil, dass beispielsweise Software bzw. Firmware für den Fehlerstromschutzschalter über das Kommunikationsgerät und die optischen Signale zum Fehlerstromschutzschalter übertragen werden können. Alternativ könnte ein Gateway vorgesehen sein, das codierte optische Signale empfängt, umwandelt und diese über eine zweite Kommunikationsverbindung an ein Kommunikationsgerät weiterleitet, das diese auswertet und über ein Display anzeigt, das vom Kommunikationsgerät ausgesendete Anfragen empfängt, umwandelt und als codierte optische Signale für einen Fehlerstromschutzschalter erzeugt und über ein drittes lichtemittierendes Element abgibt. Dies hat den Vorteil, dass ein Gateway vorhanden ist, das beispielsweise direkt an den Fehlerstromschutzschalter ansteckbar ist und mit diesem optisch mittels einer ersten optischen Kommunikationsverbindung mit dem Fehlerstromschutzschalter verbunden ist, und die Daten dann über eine zweite Kommunikationsverbindung zu einen Kommunikationsgerät bidirektional weiterleitet, so dass das Kommunikationsgerät handlicher gestaltet werden kann.

In einer vorteilhaften Ausgestaltung des Gateways ist die zweite Kommunikationsverbindung als drahtlose Kommunikationsverbindung ausgestaltet. Dies hat den Vorteil, dass eine einfache kabellose Handhabung möglich ist, was den Servicekomfort verbessert.

Die erfinderische Idee besteht darin, dass im Falle eines fehlerbedingten Auslösen des Fehlerstromschutzschalters weitere im Fehlerstromschutzschalter vorhandene Daten ausgelesen werden, um die Auslöseursache und damit die Fehlerursache genauer ermitteln zu können. Damit ist für einen Elektriker eine schnellere und kostengünstigere Fehlersuche möglich. Fehlerstromschutzschalter verfügen über eine optische Anzeige am Gerät, z.B. mittels LED, die nach einer Auslösung im Fehlerfall des Fehlerstromschutzschalters bestimmte Fehlercodes anzeigt. Damit kann die Ursache der Auslösung bereits in verschiedene Fehlerbereiche eingeteilt werden.
Die optische Anzeige am Fehlerstromschutzschalter ist für den Elektriker sehr nützlich, die Fehlersuche kann jedoch in vielen Fällen noch einen enormen Zeitaufwand bedeuten. Mit Hilfe des tragbaren Kommunikationsgerätes kann der Elektriker weitere Daten aus dem Fehlerstromschutzschalter auslesen, die z.B. über eine im Kommunikationsgerät integrierte Anzeige, wie ein LCD-Display, angezeigt werden. Somit ist eine zielorientiertere und schnellere Fehlersuche möglich.

Mit dem vorhandenen optischen Sender und einem erfindungsgemäßen optischen Empfänger, die im oder am Fehlerstromschutzschalter verbaut sind, kann eine erste, drahtlose optische Kommunikationsverbindung zwischen Mikrocontroller des Fehlerstromschutzschalters und einem Kommunikationsgerät, dass möglicherweise weiter mit einem Computer verbunden ist, hergestellt werden.

Alternativ kann diese erste drahtlose optische Kommunikationsverbindung auch als drahtlose induktive Kommunikationsverbidung oder als drahtlose Funk-Kommunikationsverbindung realisiert sein. Die codierten optischen Signale werden durch Funk-Signale ersetzt. Die Funk-Signale können codiert sein. Die jeweiligen lichtemittierenden und/oder lichtempfindlichen Elemente werden durch eine Funk-Kommunikationseinheit ersetzt. Die Funk-Kommunikationsverbindungseinheit kann bidirektional ausgestaltet sein.
Die Funk-Kommunikationsverbindungseinheit kann beispielsweise eine W-LAN Verbindung, Bluetoothverbindung, W-PAN Verbindung, RFID-Verbindung etc. sein.

Ferner kann vorgesehen sein, dass das Kommunikationsgerät Funktionen in getrennte Komponennten bzw. Geräte auslagert, beispielsweise in ein Gateway, das die direkte optische Verbindung zum Mikrocontroller des Fehlerstromschutzschalters herstellt und wiederrumm seine Daten beispielsweise drathlos, z.B. per Funk, über eine zweite Kommunikationsverbindung an das Kommunikationsgerät (ohne optische Schnittstelle) bidirektional überträgt.

Über codierte optische Signale können erweiterte Informationen zum Auslöseereignis bzw. zu physikalischen Parametern abgefragt werden und über das Kommunikationsgerät verständlich angezeigt werden.
Ferner können Daten zum Fehlerstromschutzschalter gesendet werden, zum einen für Abfragen, zum anderen aber auch für Software bzw. Firmware-update.

Ein Ausführungsbeispiel der Erfindung wird an Hand der Figuren näher erläutert. Hierbei zeigt:
FIG 1 eine Vorderansicht eines Fehlerstromschutzschalters gegen Störlichtbögen
FIG 2 eine Seitenansicht eines Fehlerstromschutzschalters gegen Störlichtbögen im halbgeöffneten Zustand
FIG 3 eine weitere Seitenansicht eines Fehlerstromschutzschalters gegen Störlichtbögen im halbgeöffneten Zustand mit erfindungsgemäßen Komponenten
FIG 4 eine Seitenansicht gemäß FIG 3 mit weiteren erfindungsgemäßen Komponenten

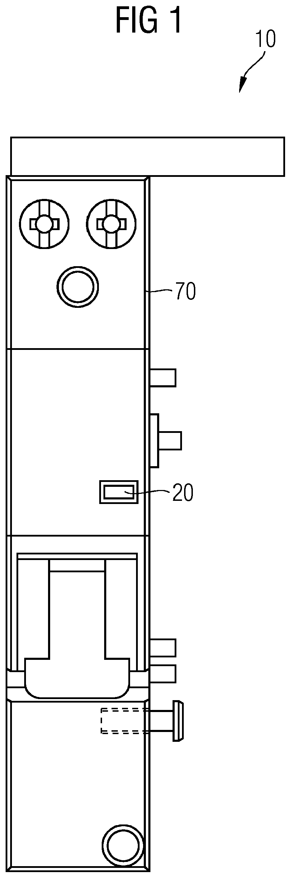

Figur 1 zeigt die Vorderansicht eines Fehlerstromschutzschalters 10, mit einem Gehäuse 70. Der Fehlerstromschutzschalter hat die Aufgabe, beim Auftreten eines Fehlerstromes in einem elektrischen Stromkreis den Stromfluss zu unterbrechen. Der Fehlerstromschutzschalter kann weitere Funktionalitäten haben, wie Erkennung von Überspannung oder Überstrom. Der Fehlerstromschutzschalter 10 weist, üblicherweise an seiner Vorderseite bzw. der Vorderseite des Gehäuses 70 - aber auch andere Stellen sind möglich, eine optische Statusanzeigevorrichtung 20 auf, die mit einem lichtemittierenden Element zusammenwirkt. Dabei kann das lichtemitierende Element direkt an bspw. der Vorderseite des Fehlerstromschutzschalters angebracht sein, so dass es von außen sichtbar ist, aber auch im Inneren des Gehäuses angeordnet sein und die optische Information mittels eines ersten Lichtwellenleiters zur Vorderseite des Fehlerstromschutzschalters geführt wird, so dass sie von außen sichtbar ist.
Der Fehlerstromschutzschalter weist weitere Elemente auf, wie Anschlussklemmen, einen Schalthebel, Regler zum Einstellen des Fehlerstromes usw., die hier allerdings nicht näher erläutert werden, in der Figur aber mit abgebildet sind.

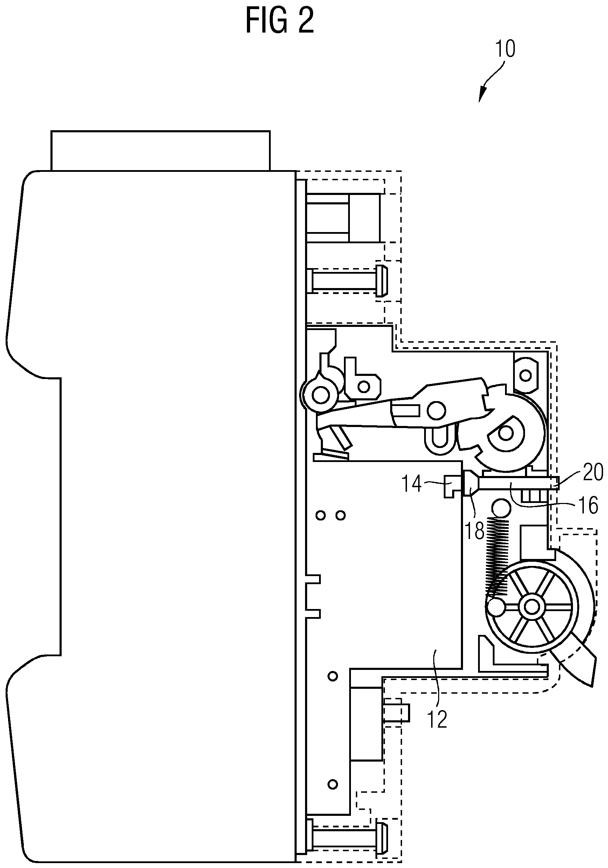

Figur 2 zeigt den Fehlerstromschutzschalter gemäß Figur 1 in einer Seitenansicht, wobei der Schalter halb geöffnet bzw. aufgeschnitten ist. Der Fehlerstromschutzschalter 10 weist eine Schutzschaltbaugruppe 12 auf, beispielsweise eine Leiterplatte, mit einer Elektronik, die einen Mikroprozessor aufweist, auf den eine Software bzw. Firmware läuft, zur Erfassung bestimmter Situationen des elektrischen Stromkreises. Die Schutzschaltbaugruppe 12 weist ein erstes lichtemittierendes Element 14 auf, beispielsweise eine Licht-emittierende Diode / LED. Das erste lichtemittierende Element 14 ist mit einem ersten Lichtwellenleiter 16, kurz LWL, derart verbunden, dass Licht vom ersten lichtemittierenden Element 14 in den ersten Lichtwellenleiter 16 eingekoppelt und im Lichtwellenleiter übertragen wird. Der erste Lichtwellenleiter 16 endet an der Vorderseite des Fehlerstromschutzschalters 10. Das im ersten LWL 16 transportierte Licht dient zur Anzeige von Statusinformationen des Fehlerstromschutzschalters. Alternativ kann sich das lichtemittierende Element auch direkt an der Vorderseite des Gehäuses 70 des Fehlerstromschutzschalters 10 befinden und über elektrische Leitungen mit der Schutzschaltbaugruppe verbunden sein. Andere Lösungen sind ebenso denkbar.

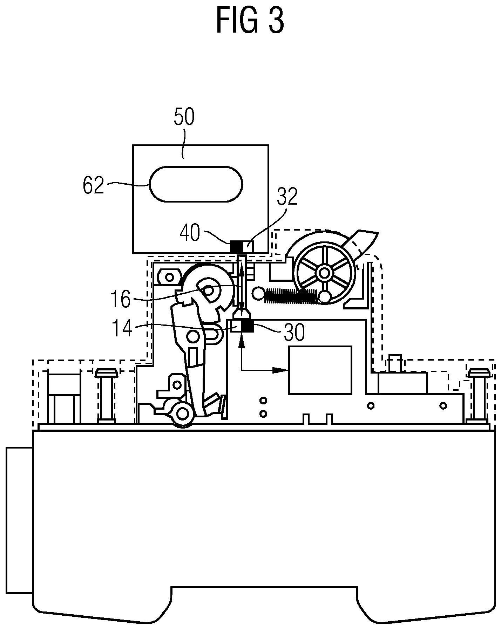

Figur 3 zeigt einen Fehlerstromschutzschalter gemäß Figur 2, mit dem Unterschied, dass dieser weitere erfindungsgemäße Komponenten aufweist. Auf der Schutzschaltbaugruppe ist neben dem ersten lichtemittierenden Element 14 ein erstes lichtempfindliches Element 30 angeordnet, beispielsweise eine Fotodiode, Fototransistor, Fotowiderstand, o.ä. Das erste lichtemittierende Element 14 ist in der Lage Licht in den ersten Lichtwellenleiter 16 einzukoppeln. Das erste lichtempfindliche Element 30 ist in der Lage Licht aus dem ersten Lichtwellenleiter 16 zu empfangen. Damit kann ein erster Lichtwellenleiter 16 als bidirektionale Verbindung zur, üblicherweise, Vorderseite des Fehlerstromschutzschalters verwendet werden, sowohl um Statusinformationen nach außen hin anzuzeigen, als auch um optische Informationen von außen zu empfangen und an das erste lichtempfindliche Element 30 weiterzuleiten.

Alternativ können das lichtempfindliche und/oder das lichtemittierende Element 14, 30 auch bspw. an der Vorderseite des Gehäuses angebracht bzw. in der Vorderseite integriert sein und über elektrischen Leitungen mit der Schutzschaltbaugruppe verbunden sein.

Das erste lichtemittierende Element 14 und/oder das erste lichtempfindliche Element 30 können weitere optische Komponenten aufweisen, wie beispielsweise optische Filter.

Um eine Aus- und Einkopplung von Licht in den ersten LWL 16 von beiden Elementen 14, 30 zu gewährleisten, ist erfindungsgemäß der Lichtwellenleiter an einem Ende verbreitert, was durch einen Fuß 18 des ersten Lichtwellenleiters 16 in Figur 2 bzw. 3 angedeutet wird. Alternativ kann sich der erste Lichtwellenleiter 16 auch Y-förmig aufteilen, um die gleiche Funktion zu erfüllen. Vorteilhaft ist, wenn nur ein Lichtwellenleiter an der Gehäuseaußenseite sichtbar ist, wobei dennoch eine bidirektionale Verbindung realisiert wird.
Dies hat den Vorteil, dass trotz zweier Elemente 14, 30 an der Vorderseite des Gehäuses nur Platz für das Ende eines einzigen Lichtwellenleiters als Statusanzeige bzw. Empfang von optischen Signalen bereitgestellt werden muss. Damit steht der übrige Platz für andere Einrichtungen, wie z.B. Aufkleber, Aufdrucke bzw. Strichcodes zur Verfügung.

Die lichtemittierenden und lichtempfindlichen Elemente 14, 30 wirken mit adäquaten zweiten lichtempfindlichen 40 bzw. lichtemittierenden Elementen 32 zusammen, die in einem Kommunikationsgerät 60 angeordnet sind. Das Kommunikationsgerät 60 weist ferner eine Anzeige 62 auf, wie beispielsweise ein Display, LCD Display etc.
Das Kommunikationsgerät sendet und empfängt codierte optische Signale, wandelt empfangene optische Signale um und zeigt die darin enthaltenen Informationen auf seiner Anzeige an. Ferner weist es nicht dargestellte Eingabemittel auf, um vorgespeicherte Abfragen auszuwählen und in Form von codierten optischen Signalen über das zweite lichtemittierende Element an den Fehlerstromschutzschalter zu senden. Ferner können über die Eingabemittel auch eigene Anfragen vom Bediener eingegeben werden, die in analoger Weise zum Fehlerstromschutzschalter gesendet werden.

Das Kommunikationsgerät weist ferner eine Schnittstelle für einen Computer, wie Personal Computer, Laptop, etc., auf. Dies kann beispielsweise eine USB Verbindung, RS 232 Verbindung, Parallele bzw. Serielle Verbindung, etc. sein. Hierüber kann eine dritte Kommunikationsverbindung aufgebaut werden, über die Daten bidirektional übertragen werden bzw. Software ausgetauscht wird. Damit können die im Kommunikationsgerät angezeigten Informationen auch auf einem Computer angezeigt bzw. ausgewertet werden. Ferner können auch Anfragen vom Computer aus über das Kommunikationsgerät an den Fehlerstromschutzschalter gestellt werden.

Das Kommunikationsgerät kann ferner eine weitere optische Schnittstelle für einen zweiten Lichtwellenleiter aufweisen. An den zweiten Lichtwellenleiter kann eine Klemme vorgesehen sein, die an den Fehlerstromschutzschalter, insbesondere über der Statusanzeigevorrichtung anklemmbar ist. Damit ist ein entfernter Betrieb des Kommunikationsgerätes vom Fehlerstromschutzschalter möglich, was eine einfachere Handhabung ermöglicht. Der zweite LWL ist über die optische Schnittstelle des Kommunikationsgerätes mit den zweiten Elementen 40, 32 des Kommunikationsgerätes verbunden.
Alternativ können die zweiten Elemente 40, 32 auch an der Klemme angeordnet sein und der zweite LWL wird durch eine elektrische Leitung ersetzt, die über eine weitere elektrische Schnittstelle, an Stelle bzw. alternativ zur optischen Schnittstelle, mit dem Kommunikationsgerät verbunden ist.

Die zweiten Elemente 40, 32 können ebenso weitere optische Komponenten, wie optische Filter aufweisen.

Um eine bidirektionale Kommunikation über den ersten und/oder den zweiten LWL zu erleichtern, können die optischen Signale auf unterschiedlichen Wellenlängen übertragen werden, die gegebenenfalls über optische Filter getrennt werden, wie im Wellenlängen- bzw. Frequenzmultiplex. Alternativ kann auch ein Zeitschema verwendet werden, wie beim Zeitmultiplex. Alternativ können auch andere Multiplexverfahren, wie Codedivisionmultiplex, etc. verwendet werden.

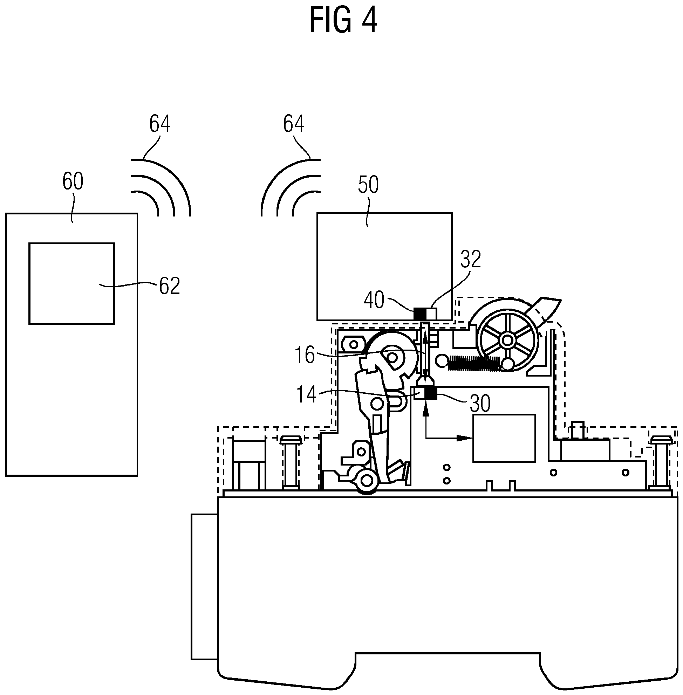

Figur 4 zeigt eine Anordnung gemäß Figur 3, mit dem Unterschied, dass das Kommunikationsgerät 60 über ein Gateway 50 mit dem Fehlerstromschutzschalter 10 kommuniziert.
Das Gateway 50 ist wie bisher zu Figur 3 beschrieben mit dem Fehlerstromschutzschalter in Verbindung. Die zweiten Elemente 40, 32 sind hierbei im Gateway angeordnet. Das Gateway 50 ist mit dem Kommunikationsgerät 60 über eine zweite Kommunikationsverbindung 64, wie eine drahtlos und/oder Funkverbindung in Kontakt.

Mittels der Statusanzeige werden verschiedene Geräte-Zustände des Fehlerstromschutzschalters angezeigt. Typischerweise leitet ein Lichtwellenleiter das Licht von der Schutzschalterbaugruppe (mittels LED) direkt an die Vorder- bzw. Front-Seite des Fehlerstromschutzschaltergehäuses.
Mit einem lichtempfindlichen Element bzw. optischen Empfänger auf der Schutzschalterbaugruppe kann der Lichtwellenleiter als bidirektionale Kommunikations-Schnittstelle genutzt werden.

Die Kopplung des Fehlerstromschutzschalters mit dem Kommunikationsgerät bzw. Gateway kann beispielsweise wie folgt realisiert werden:
1. Das Kommunikationsgerät bzw. Gateway wird auf dem Fehlerstromschutzschalter so aufgebracht, dass dessen optische Sende- und Empfangseinheit direkt über dem Lichtleiter platziert ist.
2. Das Kommunikationsgerät bzw. Gateway sendet über seinen optischen Sender 32 ein codiertes optisches Signal an den Empfänger 30. Das empfangene codierte optische Signal wird ausgewertet und im Falle einer Übereinstimmung mit einem gespeicherten Referenzwert, wird der Mikroprozessor in einen Diagnose-Modus versetzt.
3. Der Mikrocontroller gibt mittels des optischen Senders 14 über die Statusinformationen hinausgehende, erweiterte

Informationen ab, die von dem Kommunikationsgerät / Gateway empfangen, ausgewertet und über ein Display im Kommunikationsgerät dargestellt werden. 4. Ferner können weitere Abfragen vom Kommunikationsgerät (direkt bzw. über das Gateway) mittels codierter optischen Signale gestellt werden, deren Antworten vom Mikroprozessor über codierte optische Signale an das Kommunikationsgerät (direkt bzw. über das externe Gateway) gegeben werden und in analoger Weise angezeigt werden. Es kann eine bidirektionale Kommunikation erfolgen.

Das Kommunikationsgerät bzw. Gateway können nicht nur zum Auslesen von Daten des Fehlerstromschutzschalters verwendet werden, sondern beide können unabhängig voneinander derart ausgestaltet sein, dass eine Software bzw. Firmware vom Kommunikationsgerät in den Fehlerstromschutzschalter geladen wird, um die Software bzw. Firmware des Fehlerstromschutzschalters zu aktualisieren.

Alternativ kann das Gateway ebenfalls mit einer Anzeige, wie einem Display ausgestattet sein, um bei bestimmten Anwendungsfällen Informationen anzuzeigen.

Die Erfindung hat den Vorteil, dass eine Fehlersuche mit dem erfindungsgemäßen Kommunikationsgerät vereinfacht wird, da weitere intern im Fehlerstromschutzschalter vorhandene Informationen zum Abschalten des Fehlerstromschutzschalters ausgelesen bzw. abgefragt werden können, die im Fehlerstromschutzschalter gespeichert sind. Für die Fehlersuche ist damit häufig kein zusätzlicher Eingriff in die Verdrahtung des elektrischen Stromkreises erforderlich, der in praktisch realisierten Stromnetzen sehr aufwendig sein kann.

### Bezugszeichenliste

- 10: Fehlerstromschutzschalter
- 12: Schutzschaltbaugruppe
- 14: erstes lichtemittierendes Element
- 16: erster Lichtwellenleiter
- 18: Fuß des ersten Lichtwellenleiters
- 20: Statusanzeigevorrichtung
- 30: erstes lichtempfindliches Element
- 32: zweites lichtemittierendes Element
- 40: zweites lichtempfindliches Element
- 50: Gateway
- 60: Kommunikationsgerät
- 62: Anzeige
- 64: zweite Kommunikationsverbindung
- 70: Gehäuse

## Patentansprüche

1. Fehlerstromschutzschalter (10) für elektrische Stromkreisen, aufweisend ein Gehäuse (70), eine einen Mikrocontroller aufweisende Schutzschaltbaugruppe (12) zur Unterbrechung des elektrischen Stromkreises im Fehlerfall, ein als Statusanzeigevorrichtung (20) dienendes erstes lichtemittierenden Element (14), das mit der Schutzschaltbaugruppe zusammen wirkt,
**dadurch gekennzeichnet,**
**dass** ein erstes lichtempfindliches Element (30) vorgesehen ist, das mit der den Mikrocontroller aufweisenden Schutzschaltbaugruppe (12) zusammenwirkt, und die den Mikrocontroller aufweisende Schutzschaltbaugruppe (12) derart ausgestaltet ist,
**dass** bei Empfang eines codierten optischen Signales der Mikrocontroller in einen Diagnose-Modus versetzt wird und über Statusinformationen hinausgehende erweiterte Informationen mittels des ersten lichtemittierenden Elementes (14) abgegeben werden.

2. Fehlerstromschutzschalter nach Anspruch 1,
**dadurch gekennzeichnet,**
**dass** die den Mikrocontroller aufweisende Schutzschaltbaugruppe (12) derart ausgestaltet ist,
**dass** im Diagnose-Modus mittels codierter optischer Signale Anfragen an den Mikrocontroller über Informationen des Fehlerstromschutzschalters gestellt werden können, deren Antworten mittels codierter optischer Signale durch das erste lichtemittierende Element (14) abgegeben werden.

3. Fehlerstromschutzschalter nach Anspruch 1 oder 2,
**dadurch gekennzeichnet,**
**dass** die den Mikrocontroller aufweisende Schutzschaltbaugruppe derart ausgestaltet ist,
**dass** der Diagnose-Modus nach einer ersten Zeitdauer, in der kein codiertes optische Signal empfangen wird, beendet wird.

4. Fehlerstromschutzschalter nach einem der vorhergehenden Ansprüche,
**dadurch gekennzeichnet,**
**dass** das erste lichtemittierende Element (14) eine Lichtemitterdiode ist.

5. Fehlerstromschutzschalter nach einem der vorhergehenden Ansprüche,
**dadurch gekennzeichnet,**
**dass** das erste lichtempfindliche Element (30) eine Fotodiode ist.

6. Fehlerstromschutzschalter nach einem der vorhergehenden Ansprüche,
**dadurch gekennzeichnet,**
**dass** das erste lichtemittierende Element (14) auf der Schutzschaltbaugruppe (12) angeordnet ist und mit einem zu einer Gehäuseaußenseite führenden ersten Lichtwellenleiter (16) verbunden ist, so dass die optischen Signale am bzw.
außerhalb des Gehäuses sichtbar sind.

7. Fehlerstromschutzschalter nach Anspruch 6,
**dadurch gekennzeichnet,**
**dass** das erste lichtempfindliche Element (30) auf der Schutzschaltbaugruppe (12) angeordnet ist und von der Gehäuseaußenseite die empfangenen optischen Signale über den ersten Lichtwellenleiter (16) zu dem ersten lichtempfindlichen Element (30) geführt werden.

8. Fehlerstromschutzschalter nach einem der vorhergehenden Ansprüche,
**dadurch gekennzeichnet,**
**dass** die Wellenlängen des ausgesendeten optischen Signals und des empfangenen optischen Signals unterschiedlich sind.

9. Fehlerstromschutzschalter nach einem der vorhergehenden Ansprüche,
**dadurch gekennzeichnet,**
**dass** mittels codierter optischer Signale Software bzw. Firmware auf den Fehlerstromschutzschalter übertragbar ist.

10. Kommunikationsgerät für einen Fehlerstromschutzschalter, dass es derart ausgestaltet ist, dass es codierte optische Signale erzeugt und über ein zweites lichtemittierendes Element (32) abgibt, um den Fehlerstromschutzschalter in einen Diagnosezustand zu versetzen bzw. Anfragen zu senden, dass es codierte optische Signale mittels eines zweiten lichtempfindlichen Elementes (40) empfängt, diese auswertet und darin enthaltene Informationen über eine Anzeige anzeigt, **dadurch gekennzeichnet,**
**dass** es einen zweiten Lichtwellenleiter aufweist, der über eine Klemme auf den Fehlerstromschutzschalter anklemmbar ist.

11. Kommunikationsgerät für einen Fehlerstromschutzschalter nach Anspruch 10,
**dadurch gekennzeichnet,**
**dass** das Kommunikationsgerät eine Kommunikationsverbindung zu einem Computer aufweist, über die Daten von und zum Computer übertragbar sind, so dass Daten vom Computer über das Kommunikationsgerät zum Fehlerstromschutzschalter und zurück übertragen werden können.

## Claims

1. Residual current circuit breaker (10) for electrical circuits, having a housing (70), a circuit breaker assembly (12) having a microcontroller for breaking the electrical circuit in the event of a fault, a first light-emitting element (14) that serves as status display device (20) and interacts with the circuit breaker assembly,
**characterized in that**
a first light-sensitive element (30) that interacts with the circuit breaker assembly (12) having the microcontroller is provided and the circuit breaker assembly (12) having the microcontroller is configured in such a way that, upon reception of an encoded optical signal, the microcontroller is put into a diagnosis mode and extended information going beyond the scope of status information is output by means of the first light-emitting element (14).

2. Residual current circuit breaker according to Claim 1, **characterized in that** the circuit breaker assembly (12) having the microcontroller is configured in such a way that, in the diagnosis mode, enquiries about information from the residual current circuit breaker may be put to the microcontroller by means of encoded optical signals, the responses of said enquiries being output through the first light-emitting element (14) by means of encoded optical signals.

3. Residual current circuit breaker according to Claim 1 or 2, **characterized in that** the circuit breaker assembly having the microcontroller is configured in such a way that the diagnosis mode is terminated after a first time duration in which no encoded optical signal is received.

4. Residual current circuit breaker according to one of the preceding claims, **characterized in that** the first light-emitting element (14) is a light-emitting diode.

5. Residual current circuit breaker according to one of the preceding claims, **characterized in that** the first light-sensitive element (30) is a photodiode.

6. Residual current circuit breaker according to one of the preceding claims, **characterized in that** the first light-emitting element (14) is arranged on the circuit breaker assembly (12) and is connected to a first optical waveguide (16) that leads to a housing outer side, such that the optical signals are visible on or outside the housing.

7. Residual current circuit breaker according to Claim 6, **characterized in that** the first light-sensitive element (30) is arranged on the circuit breaker assembly (12) and the received optical signals are led from the housing outer side to the first light-sensitive element (30) by means of the first optical waveguide (16).

8. Residual current circuit breaker according to one of the preceding claims, **characterized in that** the wavelengths of the emitted optical signal and of the received optical signal are different.

9. Residual current circuit breaker according to one of the preceding claims, **characterized in that** software and/or firmware can be transmitted to the residual current circuit breaker by means of encoded optical signals.

10. Communication device for a residual current circuit breaker, **characterized in that**, in order to put the residual current circuit breaker into a diagnosis state and/or to send enquiries, said communication device is configured in such a way that it generates encoded optical signals and outputs said signals by means of a second light-emitting element (32), **in that** said communication device receives encoded optical signals by means of a second light-sensitive element (40), evaluates said signals and displays information contained therein by means of a display, **characterized in that** said communication device has a second optical waveguide, which can be clamped to the residual current circuit device by means of a clamp.

11. Communication device for a residual current circuit breaker according to Claim 10, **characterized in that** the communication device has a communication connection to a computer, by means of which connection data can be transferred from and to the computer, such that data can be transferred from the computer to the residual current circuit breaker and back by means of the communication device.

## Revendications

1. Commutateur de courant différentiel (10) pour des circuits électriques, comportant un boîtier (70), un module disjoncteur (12) comportant un microcontrôleur pour interrompre le circuit électrique en cas d'erreur, un premier élément (14) émetteur de lumière servant de dispositif d'affichage de statut (20), lequel ensemble coopère avec le module disjoncteur, **caractérisé en ce qu'**un premier élément photosensible (30) est prévu, lequel coopère avec le module disjoncteur (12) comportant le microcontrôleur, et le module disjoncteur (12) comportant le microcontrôleur étant conçu de telle sorte que, à la réception d'un signal optique codé, le microcontrôleur est mis en mode de diagnostic et des informations élargies allant au-delà d'informations de statut sont émises au moyen du premier élément émetteur de lumière (14).

2. Commutateur de courant différentiel selon la revendication 1, **caractérisé en ce que** le module disjoncteur (12) comportant le microcontrôleur est conçu de telle sorte que, en mode de diagnostic, il est possible d'adresser au microcontrôleur des requêtes relatives à des informations sur le commutateur de courant différentiel au moyen de signaux optiques codés et dont les réponses sont émises par le premier élément émetteur de lumière (14) au moyen de signaux optiques codés.

3. Commutateur de courant différentiel selon la revendication 1 ou 2, **caractérisé en ce que** le module disjoncteur comportant le microcontrôleur est conçu de telle sorte que le mode de diagnostique est terminé après une première durée de temps dans laquelle aucun signal optique codé n'est reçu.

4. Commutateur de courant différentiel selon l'une des revendications précédentes, **caractérisé en ce que** le premier élément émetteur de lumière (14) est une diode électroluminescente.

5. Commutateur de courant différentiel selon l'une des revendications précédentes, **caractérisé en ce que** le premier élément photosensible (30) est une photodiode.

6. Commutateur de courant différentiel selon l'une des revendications précédentes, **caractérisé en ce que** le premier élément émetteur de lumière (14) est monté sur le module disjoncteur (12) et est relié à un premier guide d'ondes optiques (16) conduisant à un côté extérieur du boîtier, de sorte que les signaux optiques sont visibles sur resp. en dehors du boîtier.

7. Commutateur de courant différentiel selon la revendication 6, **caractérisé en ce que** le premier élément photosensible (30) est situé sur le module disjoncteur (12) et **en ce que** les signaux optiques reçus vont du côté extérieur du boîtier vers le premier élément photosensible (30) en passant par le premier guide d'ondes optiques (16).

8. Commutateur de courant différentiel selon l'une des revendications précédentes, **caractérisé en ce que** les longueurs d'onde du signal optique émis et du signal optique reçu sont différentes.

9. Commutateur de courant différentiel selon l'une des revendications précédentes, **caractérisé en ce qu'**un logiciel resp. un micrologiciel peuvent être transférés au commutateur de courant différentiel au moyen de signaux optiques codés.

10. Appareil de communication pour un commutateur de courant différentiel, lequel est conçu de manière à générer des signaux optiques codés et les délivre via un deuxième élément émetteur de lumière (32) pour mettre le commutateur de courant différentiel dans un état de diagnostic resp. pour émettre des requêtes, à recevoir des signaux optiques codés au moyen d'un deuxième élément photosensible (40), à les évaluer et à afficher, via un affichage, des informations qu'ils contiennent, **caractérisé en ce qu'**il comporte un deuxième guide d'onde optique qui peut être serré sur le commutateur de courant différentiel au moyen d'une borne.

11. Appareil de communication pour un commutateur de courant différentiel selon la revendication 10, **caractérisé en ce que** l'appareil de communication présente une liaison de communication vers un ordinateur, via laquelle des données peuvent être transmises de et vers l'ordinateur, de sorte que des données peuvent être transmises de l'ordinateur vers le commutateur de courant différentiel en passant par l'appareil de communication, et retour.
